# EUROPEAN PATENT APPLICATION

(11) **EP 4 557 054 A1**
(43) Date of publication of application: **21.05.2025**
(21) Application number: 24208068.7
(22) Date of filing: 22.10.2024
(51) Int. Cl.: G06F 3/01

(54) **SYSTEM AND METHOD FOR FOVEATING VIDEO STREAM**

(30) Priority: 19.11.2023 US 202318513590
(71) Applicant: Varjo Technologies Oy, 00100 Helsinki (FI)
(72) Inventor: Strandborg, Mikko, 00100 Helsinki (FI); Räntilä, Tarmo, 00100 Helsinki (FI)
(74) Representative: Moosedog Oy

(57) **Abstract**

Disclosed is a system (100, 300) comprising server(s) (102, 302) that is communicably coupled to display apparatus(es) (104a-c, 304). The server(s) is/are configured to: receive, from display apparatus(es), information indicative of gaze directions of a user's eye; process the information to detect a beginning of a saccade; predict a target gaze location of the saccade, based on the information; and foveate a video stream according to the target gaze location after the beginning of the saccade and before an end of the saccade.

## Description

### TECHNICAL FIELD

The present disclosure relates to systems for foveating video streams. The present disclosure also relates to methods for foveating video streams.

### BACKGROUND

In recent times, there has been an ever-increasing demand for gaze-contingent image generation. Such a demand may, for example, be quite high and critical in case of evolving technologies such as immersive extended-reality (XR) technologies, which are being employed in various fields such as entertainment, real estate, training, medical imaging operations, simulators, navigation, and the like. Such immersive XR technologies create XR environments for presentation to users of XR devices (such as an XR headsets, pairs of XR glasses, or similar).

However, existing equipment and techniques for generating images have several problems associated therewith. For example, the existing equipment and techniques are inefficient in terms of accurately generating images during saccadic eye movements. Since the saccade is a rapid, involuntary eye movement that cause a sudden shift in the user's gaze from one point to another point, during the saccade, a detailed vision for the human visual system is temporarily suppressed. This occurs due to a suppression of a magnocellular pathway that is responsible for transmitting information about high-velocity motion to brain, and results in reduced sensitivity to motion during saccades. Thus, the saccade disrupts a coherent and continuous image viewing experience that align with the user's gaze, thereby resulting in visual discontinuities. Furthermore, even during the saccade, the existing equipment and techniques generate and transmit a high-motion video content, which is computationally intensive and requires considerable bandwidth for its transmission. Moreover, a side-effect of chronostasis, that is a neurological phenomenon, involves a distortion in a perception of time, thereby resulting in temporal illusions. It is also sometimes referred to as the "stopped-clock illusion", where a second hand of an analog clock appears to stay still for a longer duration than normal, when looking at the second hand for a first time.

Therefore, in light of the foregoing discussion, there exists a need to overcome the aforementioned drawbacks.

### SUMMARY

The present disclosure seeks to provide a system and a method to generate a foveated video stream for displaying at display apparatus(es), during a beginning of a saccade and before an end of said saccade, in a computationally-efficient and a bandwidth-efficient manner. The aim of the present disclosure is achieved by a system and a method which incorporate foveating video stream, as defined in the appended independent claims to which reference is made to. Advantageous features are set out in the appended dependent claims.

Throughout the description and claims of this specification, the words *"comprise"*, *"include"*, *"have"*, and *"contain"* and variations of these words, for example *"comprising"* and *"comprises"*, mean *"including but not limited to"*, and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a block diagram of an architecture of a system for foveating a video stream, in accordance with an embodiment of the present disclosure;
FIG. 2 illustrates steps of a method for foveating a video stream, in accordance with an embodiment of the present disclosure; and
FIG. 3 illustrates an exemplary sequence diagram of a data flow in a system for foveating a video stream, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising at least one server that is communicably coupled to at least one display apparatus, wherein the at least one server is configured to:
receive, from the at least one display apparatus, information indicative of a gaze direction of a user's eye;
process the information to detect a beginning of a saccade;
predict a target gaze location of the saccade, based on the information; and
foveate a video stream according to the target gaze location after the beginning of the saccade and before an end of the saccade.

In a second aspect, an embodiment of the present disclosure provides a method comprising:
receiving, from at least one display apparatus, information indicative of a gaze direction of a user's eye;
processing the information to detect a beginning of a saccade;
predicting a target gaze location of the saccade, based on the information; and
foveating a video stream according to the target gaze location after the beginning of the saccade and before an end of the saccade.

The present disclosure provides the aforementioned system and the aforementioned method for generating high-quality, realistic foveated video stream for displaying at display apparatus(es), during a beginning of a saccade and before an end of said saccade, in a computationally-efficient and a bandwidth-efficient manner. Herein, the target gaze location of the saccade is predicted, based on the information indicative of the gaze direction, and the video stream is foveated according to the (predicted) target gaze location. Even though the user's eyes are mostly blind during the saccade, the foveated video stream is sent to the at least one display apparatus and shown to a user during the saccade, in order to maintain immersiveness and coherency in a viewing experience of the user, and to prevent likelihood of subsequent high-quality foveated video streams (that would be generated/displayed after the saccade ends) from appearing chaotic or disordered to the user. Moreover, since during the saccade, the at least one server foveates the video stream according to only one target gaze location, processing resources and processing time of the at least one server, a thermal capacity of the system, a network bandwidth, and the like, are beneficially saved. In this way, the processing resources, the processing time, and the network bandwidth could also be utilised for exchanging (namely, transmitting and receiving) other additional information between the at least one server and the at least one display apparatus. The system and the method are simple, robust, support real-time and reliable generation of foveating video stream, and can be implemented with ease.

Throughout the present disclosure, the term *"display apparatus"* refers to a specialized equipment that is capable of at least displaying a video stream. The video stream is to be presented to a user of the at least one display apparatus. It will be appreciated that the term *"display apparatus"* encompasses a head-mounted display (HMD) device and optionally, a computing device communicably coupled to the HMD device. The term *"head-mounted display"* device refers to a specialized equipment that is configured to present an extended-reality (XR) environment to a user when said HMD device, in operation, is worn by said user on his/her head. The HMD device is implemented, for example, as an XR headset, a pair of XR glasses, and the like, that is operable to display a visual scene of the XR environment to the user. Examples of the computing device include, but are not limited to, a laptop, a desktop, a tablet, a phablet, a personal digital assistant, a workstation, and a console. The term *"extended-reality"* encompasses virtual reality (VR), augmented reality (AR), mixed reality (MR), and the like. The at least one server could be remotely located from the at least one display apparatus. Optionally, upon foveating the video stream, the at least one server is configured to send the (foveated) video stream to the at least one display apparatus for displaying thereat.

Notably, the at least one server controls an overall operation of the system. The at least one server is communicably coupled to (a processor of) the at least one display apparatus, for example, via a communication network.

Throughout the present disclosure, the term *"gaze direction"* refers to a direction in which the user's eye is gazing. The gaze direction may be represented by a gaze vector. Optionally, (the processor of) the at least one display apparatus is configured to: process gaze-tracking data, collected by gaze-tracking means, to determine the gaze direction of the user's eye; and send the information indicative of the gaze direction to the at least one server. Optionally, in this regard, the at least one display apparatus comprises the gaze-tracking means.

The term *"gaze-tracking means"* refers to specialized equipment for detecting and/or following gaze of the user's eyes, when the at least one display apparatus (for example, the HMD device) in operation is worn by the user. The gaze-tracking means could be implemented as contact lenses with sensors, cameras monitoring a position, a size and/or a shape of a pupil of a given eye of the user, and the like. The gaze-tracking means are well-known in the art. Determining the gaze direction of the user's eye facilitates in tracking where the user is looking/gazing. The gaze-tracking data may comprise images/videos of the user's eye, sensor values, and the like. Optionally, when processing the gaze-tracking data, (the processor of) the at least one display apparatus is configured to employ at least one of: an image processing algorithm, a feature extraction algorithm, a data processing algorithm. Techniques/algorithms for processing the gaze-tracking data to determine the gaze direction are well-known in the art. It will be appreciated that the gaze-tracking data is collected repeatedly throughout a given session of using the at least one display apparatus, as a gaze of the user's eye keeps changing whilst the at least one display apparatus is in use. It will also be appreciated that the aforesaid information is obtained by the at least one server in real time or near-real time.

Optionally, the gaze direction is a current gaze direction. Alternatively, optionally, the gaze direction is a predicted gaze direction. It will be appreciated that optionally the predicted gaze direction is predicted, based on a change in user's gaze, wherein the predicted gaze direction lies along a direction of the change in the user's gaze. In such a case, the change in the user's gaze could be determined in terms of a gaze velocity and/or a gaze acceleration of a given eye of the user, using information indicative of previous gaze directions of the given eye and/or the current gaze direction of the given eye. Yet alternatively, optionally, the gaze direction is a default gaze direction, wherein the default gaze direction is straight towards a centre of a field of view of the user. In this regard, it is considered that the user's gaze is, by default, typically directed towards the centre of the field of view of said user. In such a case, a central region of the field of view of said user is resolved to a much greater degree of visual detail, as compared to a remaining, peripheral region of the field of view of said user.

Throughout the present disclosure, the term *"saccade"* refers to a rapid movement of a given eye of the user between two or more points of fixation within a field of view of said user. Typically, unless the user's eyes are actively tracking an object or portion of the object (namely, when the user's eye are in pursuit) or are adjusting for head movements (via a vestibulo-ocular reflex), the user's eyes are primarily engaged in discrete and rapid movements known as saccades. The saccades are often described as ballistic in nature because during a beginning of a given saccade, a subsequent gaze position could be reasonably predicted, typically accurate within a few degrees. A typical duration of the given saccade lies in a range of 20 milliseconds to 200 milliseconds, and said range may vary depending on a distance the user's eyes need to travel from one point of fixation to another point of fixation. The saccades are well-known in the art, and detecting/predicting saccadic movements is also well known in the art.

Optionally, the at least one server is configured to determine at least one of: a gaze velocity, a gaze acceleration, of the user's eye, based on information indicative of the gaze direction of the user's eye obtained within a given time period. Optionally, in this regard, the beginning of the saccade is detected (namely, a saccade of the user's eye is considered is to start) when a gaze velocity of the user's eye is higher than a first predefined threshold, and an ending of the saccade is detected (namely, the saccade of the user's eye is considered is to end) when a gaze velocity of the user's eye is lower than a second predefined threshold. Similarly, optionally, the beginning of the saccade is detected when a gaze acceleration of the user's eye is higher than a third predefined threshold, and the ending of the saccade is detected when a gaze acceleration of the user's eye is lower than a fourth predefined threshold. The term *"gaze velocity"* refers to an angular velocity with which the user's gaze is changing, whereas the term *"gaze acceleration"* refers to an angular acceleration with which the user's gaze is changing.

Optionally, the first predefined threshold lies in a range of 50 to 90 degrees of angular width per second. Optionally, the second predefined threshold lies in a range of 50 to 70 degrees of angular width per second. As an example, the first predefined threshold can be 80 degrees of angular width per second, while the second predefined threshold can be 60 degrees of angular width per second. In such a case, the saccade is detected to begin when the gaze velocity exceeds 80 degrees of angular width per second, and to end when the gaze velocity is lower than 60 degrees of angular width per second. Optionally, the third predefined threshold lies in a range of 2000 to 100000 degrees of angular width per second squared, and the fourth predefined threshold lies in a range of 2000 to 100000 degrees of angular width per second squared. In general, the state-of-the-art algorithms for saccade detection employ complex models for the eye movement.

Optionally, when determining the gaze velocity, the at least one server is configured to determine a rate of change of the gaze direction of the user's eye (namely, a rate of change of gaze positions) within the given time period. In this regard, the at least one server is configured to determine a distance between two consecutive gaze positions (for example, such as an initial gaze position at a first time instant and a final gaze position at a second time instant), and then divide said distance by a difference between time instants of determining the two consecutive gaze positions, in order to obtain the gaze velocity in a particular direction. Optionally, when determining the gaze acceleration, the at least one server is configured to determine a rate of change of the gaze velocity within the given time period. In this regard, the at least one processor is configured to determine a difference between two consecutive gaze velocities (for example, such as an initial gaze velocity at a first time instant and a final gaze velocity at a second time instant), and then divide said difference by a difference between time instants of determining the two consecutive gaze velocities, in order to obtain the gaze acceleration in a particular direction. The gaze velocity and the gaze acceleration are used to determine how fast the user's gaze is changing. Optionally, the given time period lies in a range of 1 millisecond to 10 milliseconds. The aforesaid range would be well-applicable when the gaze direction is determined, for example, at a frequency of 1000 Hertz. Determination of the gaze velocity and/or the gaze acceleration using the user's gaze is well-known in the art.

It will be appreciated that the beginning and the ending of the saccade could also be detected using other ways, apart from or in addition to using the information indicative of the gaze direction. For example, an electromyography (EMG) or an electrooculography (EOG) could be employed for detecting the beginning and the ending of the saccade, wherein electronic signals controlling eye muscles are continuously monitored, and changes in such electronic signals could be analysed to provide information pertaining to the beginning and the ending of the saccade. An EMG-based saccade detection technique and an EOG-based saccade detection technique are well-known in the art. Alternatively, an infrared (IR) illumination reflection imaging technique could also be employed, wherein IR light sources and IR light sensors are used to detect/track a position of iris of the user's eye, in order to detect the beginning and the ending of the saccade.

Throughout the present disclosure, the term *"target gaze location"* of the saccade refers to a gaze location within a field of view of the user's eye when the saccade ends. In other words, the target gaze location of the saccade represents an endpoint of a saccadic eye movement, and indicates a specific area or an object within the field of view that the user aims to fixate as the user's gaze is shifted. It will be appreciated that a starting gaze location of the saccade refers to a gaze location within the field of view of the user's eye when the saccade begins. The starting gaze location could be accurately known to the at least one server from the information indicative of the gaze direction.

Notably, since the aforesaid information is obtained continuously by the at least one server, a change in the gaze direction can be easily and accurately known to the at least one server. In addition to this, an amplitude of the saccade could also be determined by the at least one server, based on at least one of: the gaze velocity, the gaze acceleration. Therefore, the starting gaze location of the saccade, the direction in which the gaze direction is changing, and the amplitude of the saccade together can be utilised for predicting the target gaze location of the saccade. Predicting the target gaze location of the saccade is well-known in the art. It will be appreciated that the term *"amplitude"* of the saccade refers to a displacement between a starting point of the saccade (i.e., a point where the saccade begins) and an ending point of the saccade (i.e., a point where said saccade ends). Furthermore, a relationship between the gaze velocity and the amplitude of the saccade could be correlated, for example, greater the gaze velocity, greater is the amplitude of the saccade, or vice versa. Similarly, greater the gaze acceleration, greater is the amplitude of the saccade, or vice versa. Determining the amplitude of the saccade using the gaze velocity and/or the gaze acceleration is well-known in the art.

Optionally, when foveating the video stream according to the target gaze location, the at least one server is configured to define a gaze region and a peripheral region within the video stream according to the target gaze location, wherein the gaze region surrounds the peripheral region and an angular resolution of the gaze region is higher than an angular resolution of the peripheral region. In this regard, the at least one server foveates a plurality of image frames of the video stream in a same manner, i.e., a gaze region and a peripheral region within each of the plurality of image frames are identified according to the (predicted) target gaze location only. Optionally, when defining the gaze region, the at least one server is configured to map the target gaze location onto a given image frame of the video stream. The gaze region could, for example, be at a centre of the given image frame, be a top-left region of the given image frame, a bottom-right region of the given image frame, or similar. In this way, the foveated video stream is generated by the at least one server. Optionally, upon such generation, the at least one server is configured to send the foveated video stream to the at least one display apparatus for displaying thereat after the beginning of the saccade and before the end of the saccade. Optionally, the video stream is generated by at least one XR application that executes on the at least one server. The at least one XR application may pertain to an XR game, an XR tutorial, an XR simulator, an XR movie, and the like.

It will be appreciated that even though the user's eyes are mostly blind during the saccade, the foveated video stream (generated according to the predicted target gaze location) is still shown to the user during the saccade in order to maintain immersiveness and coherency in a viewing experience of the user, and to prevent likelihood of subsequent high-quality foveated video streams (that would be generated/displayed after the saccade ends) from appearing chaotic or disordered to the user. Moreover, since during the saccade, the at least one server foveates the video stream according to only one target gaze location, processing resources and processing time of the at least one server, a thermal capacity of the system, a network bandwidth, and the like, are beneficially saved. In this way, the processing resources, the processing time, and the network bandwidth could also be utilised for exchanging (namely, transmitting and receiving) other additional information between the at least one server and the at least one display apparatus.

Optionally, the at least one server is configured to:
predict a duration of the saccade, based on the information; and
choose at least one encoding parameter to be used for encoding the video stream during the saccade.

In this regard, the duration of the saccade can be predicted based on the gaze velocity (that is determined using the information indicative of the gaze direction) and the amplitude of the saccade (as discussed earlier), for example, using a predefined correlation. This is because greater the amplitude of the saccade, greater is the duration of the saccade (i.e., the saccade would take considerably more time to complete), and vice versa. Additionally, greater the gaze velocity, shorter is the duration of the saccade, and vice versa. Thus, the duration of the saccade is inversely related to the gaze velocity, and is directly related to the amplitude of the saccade. In a basic approach, the predefined correlation could be expressed as D = k(A/V), D is the duration of the saccade, A is the amplitude of the saccade, V is the gaze velocity, and k is a constant that may be predetermined experimentally or based on empirical data.

Further, optionally, prior to sending the video stream to the at least one display apparatus, the at least one server is configured to encode the video stream, and then send the encoded video stream to the at least one display apparatus. It is to be understood that the encoded video stream would be a compact representation of visual content originally represented in the video stream. The technical benefit of such an encoding is that the encoded video stream requires relatively lesser storage and lesser transmission resources (i.e., the network bandwidth), as compared to the (original) video stream. Thus, when the encoded video stream is communicated to the at least one display apparatus, the encoded video stream is transmitted from the at least one server to the at least one display apparatus in a bandwidth-efficient manner. Optionally, when the encoded video stream is received by the at least one display apparatus, the processor of the display apparatus is configured to decode the encoded video stream, prior to displaying it. It will be appreciated that the processor employs a decompression algorithm that is well-compatible with a compression algorithm (that would have been employed by the at least one server when encoding the video stream into the encoded video stream, as discussed hereinabove). Compression algorithms and decompression algorithms are well-known in the art.

It will be appreciated that for the aforesaid encoding, the at least one server selects the at least one encoding parameter, for example, based on visual content represented in the video stream, an availability of the network bandwidth, an end visual quality of the video stream, and the like. Typically, the at least one encoding parameter refers to a configurable setting or a variable used in the aforesaid encoding of the video stream. Optionally, the at least one encoding parameter comprises at least one of: a compression ratio, a file format, a bitrate, a video codec, an audio codec, a resolution, a frame rate. The encoding parameters are well-known in the art.

Optionally, the at least one encoding parameter is chosen based on the duration of the saccade. In this regard, the duration of the saccade is considered for selecting the at least one encoding parameter in order to prioritize speed and efficiency while sending the video stream to the at least one display apparatus without deteriorating an overall visual quality of the video stream. For example, when the duration of the saccade is long, the at least one encoding parameter could be chosen such that it facilitates in an overall size of the video stream for transmission. Conversely, when the duration of the saccade is short, the at least one encoding parameter could be chosen such that it facilitates in maintaining a high video quality. Moreover, a resolution of the video stream and a frame rate could also be lowered temporarily during the saccade. The technical benefit of selecting the at least one encoding parameter based on the duration of the saccade is that it allows for optimized video encoding and transmission tailored to a limited time frame of an eye movement. By choosing such encoding parameter(s) may ensure faster encoding and transmission of the video stream, and may reduce a potential risk of video buffering/lag, thereby providing a smooth and uninterrupted viewing experience to the user of the at least one display apparatus.

Optionally, the at least one server is configured to employ the at least one encoding parameter to reduce a video stream bitrate during the saccade. In this regard, a low bitrate and a high compression ratio could be used for encoding the video stream for an entirety of the duration of the saccade. However, upon ending of the saccade (i.e., once the saccade ends), the bitrate could be increased (for example, to some predefined normal value), and the compression ratio could be decreased accordingly. Beneficially, this may facilitate in reducing the overall size of the video stream for transmission, in a time-efficient manner and a bandwidth-efficient manner.

Optionally, the at least one server is configured to change the at least one encoding parameter and employ the at least one encoding parameter to increase the video stream bitrate before the saccade ends. In this regard, a low bitrate and a high compression ratio could be used for encoding a portion of the video stream from the beginning of the saccade until a predetermined percentage of the duration of the saccade has elapsed, and a high bitrate and a low compression ratio could be used for encoding a remaining portion of the video stream before the saccade ends (i.e., for a remaining duration of the saccade). Beneficially, this facilitates in transmitting the video stream with minimal loss in visual quality, and in providing considerable realism and immersiveness to the user of the at least one display apparatus, when the video stream is displayed to the user.

Optionally, the at least one server is configured to prioritize at least one other data stream during the saccade. In this regard, during the saccade, the network bandwidth is conserved because the foveation of the video stream is performed by taking into account only one target gaze location (as discussed earlier). Advantageously, such an efficient utilization of the network bandwidth as well as the processing resources of the at least one server facilitate in allocating a remaining bandwidth and processing resources for transmission of the at least one other data stream between the at least one server and the at least one display apparatus. In an example, during the saccade, the at least one server sends the at least one other data stream comprising such as an audio data stream, to the at least one display apparatus, while the at least one display apparatus sends the at least one other data stream comprising such as image data (for example, such as video-see through (VST) image data, depth data, and the like) and/or tracking data (for example, such as pose-tracking data) to the at least one server.

Optionally, the at least one server is configured to increase a bitrate for encoding at least one other data stream during the saccade. In this regard, the at least one server could increase the bitrate for encoding the at least one other data stream to ensure the at least one other data stream such as the audio data stream (along with the foveated video stream), can be sent smoothly and without any latency/delay to the at least one display apparatus. By temporarily allocating more bandwidth or the bitrate for encoding the at least one other data stream during the saccade, the at least one server can accommodate rapid changes in the user's gaze positions, and accordingly prioritizes in-time delivery of audio-visual content, without being computationally overburdened. It will be appreciated that such a proactive adjustment prevents disruptions, such as buffering or audio-video de-synchronization, thereby ensuring a seamless and high-quality user experience, especially during dynamic eye movements like the saccades.

Optionally, the at least one server is configured to:
determine a region of interest within the video stream based on the target gaze location of the saccade; and
choose different encoding parameters to be used for encoding the region of interest and a remaining region of the video stream.

Herein, the term *"region of interest"* refers to a region (namely, a portion) within the video stream whereat the user is focussing or is more likely to focus. In other words, the region of interest is a fixation region within the video stream. Notably, the region of interest has visual representation that is more noticeable and prominent, as compared to visual representation in remaining region(s) within the video stream. In such a case, objects lying within the region of interest (i.e., gaze-contingent objects) are focused onto foveae of the user's eyes, and are resolved to a much greater detail as compared to remaining object(s) lying outside the region of interest. It will be appreciated that the user is more likely to focus on a region within the video stream that represents, for example, such as a salient feature (namely, a visually alluring feature), a moving object, or a virtual object. For example, the user is more likely to focus on an edge, a corner, or a high-frequency texture detail as compared to interior features or low-frequency texture detail. The user may also more likely to focus on a central region within the video stream. It will be appreciated that the region of the interest may have a well-shaped boundary that resembles any of a circle, a polygon, an ellipse, and the like. Alternatively, the region of the interest may have a freeform-shaped boundary i.e., a boundary that does not resemble any specific shape.

Optionally, when determining the region of interest, the at least one server is configured to map the (predicted) target gaze location of the saccade onto the video stream. The region of interest could, for example, be at a centre of a field of view of the video stream, be a top-left region of said the video stream, a bottom-right region of the video stream, or similar. It will be appreciated that as the user's gaze keeps changing, the region of interest within the video stream may also change accordingly.

It will be appreciated that using the different encoding parameters for the region of interest and the remaining region addresses a need for an efficient processing resource allocation of the at least one server and an enhanced user experience simultaneously. This is because during the saccade, the region of interest where the user is actively looking or going to look demands a higher video quality and a faster encoding, as compared to the remaining region, in order to ensure that the gaze-contingent objects can be highly accurately and realistically shown to the user. Thus, the remaining region where user's attention is not focussed, can be encoded at a lower quality to save bandwidth and processing resources of the at least one server. Beneficially, this enables in efficient utilization of available network resources by dynamically adjusting the different encoding parameters based on visual context of the video stream (i.e., the region of interest and the remaining region). Moreover, it enhances an overall viewing experience of the user, contributing to an immersive and realistic viewing experience during rapid eye movements like the saccades.

Optionally, the at least one server is further configured to choose at least one foveation parameter to be used for foveating the video stream during the saccade. The term *"foveation parameter"* refers to a variable or a setting that is employed to foveate the video stream. Thus, how visual content in the video stream is to be processed and subsequently presented, for example, to a user, may depend on the at least one foveation parameter. Typically, foveation refers to a technique for selectively adjusting a presentation of visual information represented in an image, based on the human fovea's characteristics. Optionally, the at least one foveation parameter comprises at least one of: a resolution of the region of interest, a resolution of the remaining region, a foveation curve that is employed to foveate the video stream variables that determine how visual content is processed and presented to a user. The foveation curve is well-known in the art. The at least one foveation parameter could be adjusted dynamically for allocating processing resources of the at least one server in an efficient manner, for example, by prioritising processing of the region of interest. This may also enhance a user's viewing experience whilst conserving the processing resources.

In an example where the foveation is implemented using a dual-viewport approach, one viewport may encompass an entire field of view of a user at a low resolution, while other viewport concentrates only a gaze region at a high resolution. In such a case, a choice of the at least one foveation parameter may involve lowering a resolution of the gaze region, and simultaneously increasing the resolution of a peripheral region (surrounding the gaze region) during the saccade. Alternatively, both the aforesaid resolutions could also be lowered during the saccade. Such a dynamic adjustment aligns with the basic objective of the foveation, which is to enhance the visual content in real-time, and prioritise what the user is most likely to perceive. In another example, when the foveation relies on a log-polar image transformation (which is well-known in the art), a specific foveation curve may be employed. Such a curve represents how a resolution (such as in terms of pixels per degree (PPD)) vary for different angular distances from a focal point of the gaze region. Selection and modification of the foveation curve cater to the user's changing focus during saccades, thereby ensuring that a highest resolution is allocated to areas of interest, and mimicking the characteristics of the human vision. It will be appreciated that choosing the at least one foveation parameter may facilitates in conserving computational resources, reduce bandwidth consumption, and enhance the user's experience.

Optionally, the at least one server is further configured to refine a prediction of the target gaze location during the saccade. In this regard, the beginning of the saccade is usually detected early in an eye movement process, but initially, predicting the target gaze location may be imprecise. This means that while the at least one server can identify the beginning of the saccade relatively quickly, the prediction for the precise endpoint (i.e., predicting the target gaze location) could be less accurate at the beginning of the saccade as a peak gaze velocity is generally observed towards a middle of the duration of the saccade. Therefore, the prediction of the target gaze location could be continuously improved (namely, fine-tuned) as the saccade progresses. The technical benefit of such a refinement lies in optimizing processing resource allocation of the at least one server and data transmission. For example, by starting certain operations, such as adjusting encoding parameter(s), slightly later in the saccade when the prediction is more accurate, the at least one server may ensure that these adjustments are applied precisely as and when required. This may potentially ensure that prominent visual information within the video stream corresponding to an actual target gaze location of the user's eye, would be received at a high quality and without any perceivable latency. Moreover, said refinement also facilitates setting some limits in network latency and constraints, for example, when a network roundtrip time exceeds the predicted duration of the saccade, it may not be feasible for the at least one server to make encoding bitrate changes. Nevertheless, the saccade detection and its prediction remains valuable for congestion management within the system, ensuring an efficient and responsive viewing experience for users during saccadic eye movements.

Optionally, the at least one server is further configured to send, to a congestion control network device, information indicative of at least one of: the beginning of the saccade, a duration of the saccade. Herein, the term *"congestion control network device"* refers to a component within a communication network responsible for monitoring and managing data traffic between the at least one server and the at least one display apparatus, to prevent any congestion. The congestion control network device ensures that network resources are allocated efficiently, avoiding bottlenecks and disruptions in data transmissions. It does so by employing well-known congestion control algorithms to regulate data flow, prioritize traffic, and maintain a stability and a performance of the communication network, especially during events of high demand or unusual network conditions. Such congestion control network devices are well-known in the art.

It will be appreciated that sending the information indicative of the beginning of the saccade and/or the duration of the saccade to the congestion control network device facilitates in proactively improving data transmission and resource allocation within the communication network during saccadic eye movements. By informing the congestion control network device regarding the beginning of the saccade and/or the duration of the saccade, the communication network can prepare itself in advance for potential spikes in data transmission demands. This early awareness allows the communication network to allocate bandwidth and processing resources accordingly, ensuring a smooth and reliable data transmission between the at least one server and the at least one display apparatus. The technical benefit of this is that it helps prevent network congestion by proactively adjusting resource allocation based on expected demands during the saccade, for example, when the at least one server is serving a plurality of display apparatuses simultaneously. This may also improve an overall viewing experience of users of such display apparatuses.

The present disclosure also relates to the method as described above. Various embodiments and variants disclosed above, with respect to the aforementioned system, apply *mutatis mutandis* to the method.

Optionally, the method further comprises:
predicting a duration of the saccade, based on the information; and
choosing at least one encoding parameter to be used for encoding the video stream during the saccade.

Optionally, the method further comprises choosing at least one foveation parameter to be used for foveating the video stream during the saccade.

Optionally, the method further comprises choosing the at least one encoding parameter based on the duration of the saccade.

Optionally, the method further comprises employing the at least one encoding parameter to reduce a video stream bitrate during the saccade.

Optionally, the method further comprises changing the at least one encoding parameter and employing the at least one encoding parameter to increase the video stream bitrate before the saccade ends.

Optionally, the method further comprises prioritizing at least one other data stream during the saccade.

Optionally, the method further comprises increasing a bitrate for encoding at least one other data stream during the saccade.

Optionally, the method further comprises:
determining a region of interest within the video stream based on the target gaze location of the saccade; and
choosing different encoding parameters to be used for encoding the region of interest and a remaining region of the video stream.

Optionally, the method further comprises refining a prediction of the target gaze location during the saccade.

Optionally, the method further comprises sending, to a congestion control network device, information indicative of at least one of: the beginning of the saccade, a duration of the saccade.

### DETAILED DESCRIPTION OF THE DRAWINGS

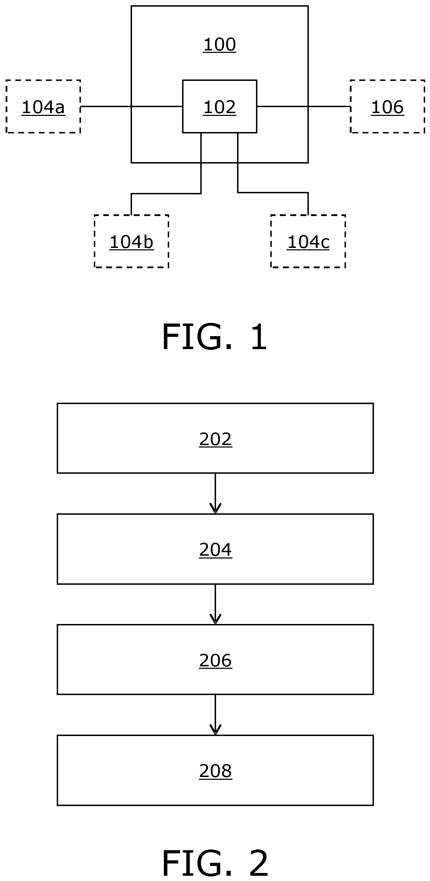

Referring to FIG. 1, illustrated is a block diagram of an architecture of a system **100** incorporating saccade-based image rendering, in accordance with an embodiment of present disclosure. The system **100** comprises at least one server (for example, depicted as a server **102**)**.** The server **102** is communicably coupled to at least one display apparatus (for example, depicted as display apparatuses **104a, 104b,** and **104c).** Optionally, the server **102** is communicably coupled to a congestion control network device **106.** The server **102** is configured to perform various operations, as described earlier with respect to the aforementioned first aspect.

It may be understood by a person skilled in the art that FIG. 1 includes a simplified architecture of the system **100,** for sake of clarity, which should not unduly limit the scope of the claims herein. It is to be understood that the specific implementation of the system **100** is provided as an example and is not to be construed as limiting it to specific numbers or types of servers, display apparatuses, and congestion control network device. The person skilled in the art will recognize many variations, alternatives, and modifications of embodiments of the present disclosure.

Referring to FIG. 2, illustrated are steps of a method incorporating saccade-based image rendering, in accordance with an embodiment of the present disclosure. At step **202,** information indicative of a gaze direction of a user's eye is received from at least one display apparatus. At step **204,** the information is processed to detect a beginning of a saccade. At step **206,** a target gaze location of the saccade is predicted, based on the information. At step **208,** a video stream is foveated according to the target gaze location after the beginning of the saccade and before an end of the saccade.

The aforementioned steps are only illustrative and other alternatives can also be provided where one or more steps are added, one or more steps are removed, or one or more steps are provided in a different sequence without departing from the scope of the claims.

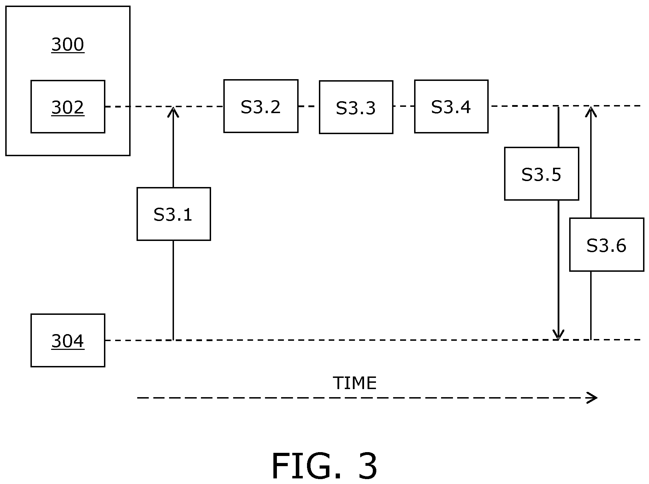

Referring to FIG. 3, illustrated is an exemplary sequence diagram of a data flow in a system **300** for foveating a video stream, in accordance with an embodiment of the present disclosure. The system **300** comprises at least one server (for example, depicted as a server **302**)**.**

The server **302** is communicably coupled to at least one display apparatus (for example, depicted as a display apparatus **304).** At step S3.1, the server **302** receives, from the display apparatus **304,** information indicative of a gaze direction of a user's eye. An upward arrow at the step S3.1 only indicates a data flow of receiving the information indicative of the gaze direction from the display apparatus **304** at the server **302.** At step S3.2, the server **302** processes the information to detect a beginning of a saccade of the user's eye. At step S3.3, the server **302** predicts a target gaze location of the saccade, based on the information. At step S3.4, the server **302** foveates a video stream according to the target gaze location after the beginning of the saccade and before an end of the saccade. The steps S3.2, S3.3, and S3.4 are performed at the server **302** at different time instants in a sequential manner. At step S3.5 the server **302** sends the foveated video stream to the display apparatus **304** for displaying thereat, wherein when sending the foveated video stream, the server **302** employs at least one encoding parameter to decrease a bitrate of the foveated video stream from the beginning of the saccade until a predetermined percentage of a duration of the saccade has elapsed, and then to increase the bitrate of the foveated video stream before the saccade ends. In addition to this, at the step S3.5, the server **302** also sends at least one other data stream (such as an audio data stream) to the display apparatus **304** during the saccade. At the step S3.6, the display apparatus **304** sends image data (for example, such as video-see through (VST) image data, depth data, and the like) and/or tracking data (for example, such as pose-tracking data) to the server **302** during the saccade. The steps S3.5 and S3.6 may be performed simultaneously. A downward arrow at the step S3.5 only indicates a data flow of sending the foveated video stream and the at least one other data stream from the server **302** to the display apparatus **304.** An upward arrow at the step S3.5 only indicates a data flow of sending the image data and/or the tracking data from the display apparatus **304** to the server **302.** It will be appreciated that the steps S3.1, S3.2, S3.3, S3.4, and S3.5 collectively represent a sequence diagram of a data flow between the server **302** and the display apparatus **304** with respect to time.

FIG. 3 is merely an example, which should not unduly limit the scope of the claims herein. A person skilled in the art will recognize many variations, alternatives, and modifications of embodiments of the present disclosure.

## Claims

1. A system (100, 300) comprising at least one server (102, 302) that is communicably coupled to at least one display apparatus (104a-c, 304), wherein the at least one server is configured to:
receive, from the at least one display apparatus, information indicative of a gaze direction of a user's eye;
process the information to detect a beginning of a saccade;
predict a target gaze location of the saccade, based on the information; and
foveate a video stream according to the target gaze location after the beginning of the saccade and before an end of the saccade.

2. The system (100, 300) of claim 1, wherein the at least one server (102, 302) is further configured to:
predict a duration of the saccade, based on the information; and
choose at least one encoding parameter to be used for encoding the video stream during the saccade.

3. The system (100, 300) of claim 2, wherein the at least one encoding parameter is chosen based on the duration of the saccade.

4. The system (100, 300) of claim 2 or 3, wherein the at least one server (102, 302) is further configured to employ the at least one encoding parameter to reduce a video stream bitrate during the saccade.

5. The system (100, 300) of claim 4, wherein the at least one server (102, 302) is further configured to change the at least one encoding parameter and employ the at least one encoding parameter to increase the video stream bitrate before the saccade ends.

6. The system (100, 300) of any of claims 2-5, wherein the at least one server (102, 302) is further configured to prioritize at least one other data stream during the saccade.

7. The system (100, 300) of any of claims 2-6, wherein the at least one server (102, 302) is further configured to increase a bitrate for encoding at least one other data stream during the saccade.

8. The system (100, 300) of any of the preceding claims, wherein the at least one server (102, 302) is further configured to:
determine a region of interest within the video stream based on the target gaze location of the saccade; and
choose different encoding parameters to be used for encoding the region of interest and a remaining region of the video stream.

9. The system (100, 300) of any of the preceding claims, wherein the at least one server (102, 302) is further configured to refine a prediction of the target gaze location during the saccade.

10. The system (100, 300) of any of the preceding claims, wherein the at least one server (102, 302) is further configured to send, to a congestion control network device (106), information indicative of at least one of: the beginning of the saccade, a duration of the saccade.

11. The system (100, 300) of any of the preceding claims, wherein the at least one server (102, 302) is further configured to choose at least one foveation parameter to be used for foveating the video stream during the saccade.

12. A method comprising:
receiving, from at least one display apparatus (104a-c, 304), information indicative of a gaze direction of a user's eye;
processing the information to detect a beginning of a saccade;
predicting a target gaze location of the saccade, based on the information; and
foveating a video stream according to the target gaze location after the beginning of the saccade and before an end of the saccade.

13. The method of claim 12, further comprising:
predicting a duration of the saccade, based on the information; and
choosing at least one encoding parameter to be used for encoding the video stream during the saccade,

14. The method of claim 13, further comprising employing the at least one encoding parameter to reduce a video stream bitrate during the saccade,
wherein optionally, the method further comprises changing the at least one encoding parameter and employing the at least one encoding parameter to increase the video stream bitrate before the saccade ends.

15. The method of any of claims 12-14, further comprising:
determining a region of interest within the video stream based on the target gaze location of the saccade; and
choosing different encoding parameters to be used for encoding the region of interest and a remaining region of the video stream.
